# EUROPEAN PATENT APPLICATION

(11) **EP 1 331 784 A1**
(43) Date of publication of application: **30.07.2003**
(21) Application number: 02001409.8
(22) Date of filing: 21.01.2002
(51) Int. Cl.: H04L 29/06, G06F 17/60, G06F 17/30

(54) **A method for providing access to contents on a network based on content access rights**

(71) Applicant: TRIC AB, 103 90 Stockholm (SE)
(72) Inventor: Lövbrand, Anders, 114 37 Stockholm (SE); Aglander, Markus, 181 42 Lidingö (SE)
(74) Representative: Lind, Urban

(57) **Abstract**

A method for providing a user (1), connected to a Wide Area Network (2) via a network gateway (3), with access to services provided by content providers (4) on said Wide Area Network. The method comprises providing a database (7) for storing content access rights for said user (1), receiving (S2), from said user, a request (20) to contents from one of said content providers (4), accessing (S3) said database (7), to determine the content access rights for said user, appending (S6) a representation (26) of said content access rights to said request, and forwarding (S7) said request to the Wide Area Network.

A content provider receiving such a request will thus be able to determine whether or not the user making the request is entitled to access the requested contents.

## Description

### Technical field

The present invention relates to a method for providing a user, connected to a Wide Area Network via a network gateway, with access to contents (information, services etc.) provided by content providers on said Wide Area Network.

### Technical background

In many data communication systems, multiple users gain access to content in a network through one central gateway. One example is the case when users of mobile terminals access the Internet through a WAP gateway or the like.

A problem with this structure is that the central gateway acts as one user on the Internet. This means that a content provider, connected to the network who receives a request for information from a user connected to the central gateway, will not be able to distinguish from which particular user this request originates, without some form of identification process.

The operator of the central gateway is typically the company administrating the network access, in which case it is the operator of the central gateway that has the exclusive end user billing relation. In order to improve their revenue, operators would like to be able to deliver personalized contents, such as subscriber based services, from the content providers. This would enable the operator to charge the users based on the content access they desire.

Through WO00/29982, hereby incorporated by reference, it is known to distinguish between different users of the same workstation, by storing a personal profile representing the users preferences, and appending this profile to any request made by the user. A content provider receiving this request will then be able to determine the preferences of the user, and adjust the delivered content appropriately. However, the method described in WO00/29982 is based on preferences determined by the users themselves.

The above described problem is to allow the operator controlling a central gateway to communicate user privileges of a plurality of users to different content providers.

### Summary of the invention

Therefore, it is an object with the present invention to provide a method for enabling restricted content access in a data communication system of the above mentioned kind.

A further object is to allow an operator of a network gateway to provide users with individually chosen access.

This and other objects are achieved with a method of the previously mentioned kind, comprising providing a database for storing content access rights for said user, receiving, from said user, a request (20) to contents from one of said content providers, accessing said database, to determine the content access rights for said user, appending a representation of said content access rights to said request, and forwarding said request to the intended content provider.

In short, the gateway intercepts a request from a user, and appends a profile containing the access rights of the user to the request before sending it on to the intended content provider via the network. This is preferably performed for every request, without need for distinguishing between requests, making the process simple to implement.

The access rights of the user are stored in a database, maintained by the operator of the gateway, containing the access rights of each user. Preferably, the database can be updated in response to changing user privileges, resulting in different access rights.

A content provider receiving such a request will thus be able to determine whether or not the user making the request is entitled to access the requested contents. Content providers participating in the system will perform such examination of the profile, while other content providers, e.g. publicly available sites, will disregard, and not be affected by, the profile.

By this method, it becomes easy for the operator to provide a personalized content access through the gateway, and to charge for this service. Users willing to pay for access to a specific content provider will notify the operator and be charged accordingly. In return, the user's access rights will be updated in the database. Consequently, requests made by the user will in the future be appended a message containing these updated rights, so that the mentioned content provider will grant access to such a request. The content provider will in turn receive a share of the fee charged by the operator.

The representation of access rights (user profile) appended to user requests is preferably a simple character string, or even a binary string. The string can be designed in a number of ways, as long as it is capable of communicating to a receiving content provider whether or not the user making the request is entitled to access.

The system for charging and billing can of course be varied. As an example, an operator may charge a user a fixed sum every month or access to a specified package of content providers (much like a subscription to a cable TV package). This monthly fee can then be distributed among the participating content providers based on predefined quotas, on relative user utilization (access time, bitrate, etc), on relative attractiveness of the content provider, or in any other way.

The method can advantageously be implemented in a WAP system, i.e. where the gateway is a WAP gateway. In this case, the user terminals are typically wireless terminals, such as WAP cellular phones.

Another area of application is in a proxy server system, i.e. where a number of network clients are connected via a proxy server, acting as a gateway. This is standard procedure whenever a local network with a plurality of clients is connected to a Wide Area Network, such as the Internet.

### Brief description of the drawings

These and other aspects of the invention will be further described in the following, with reference to the drawings, illustrating a presently preferred embodiment of the invention.
Fig 1 is a schematic drawing of a system implementing an embodiment of the invention.
Fig 2 is a flow chart of a method performed by the system in fig 1.
Fig 3 is an example of a request according to an embodiment of the invention.

### Detailed description of a preferred embodiment

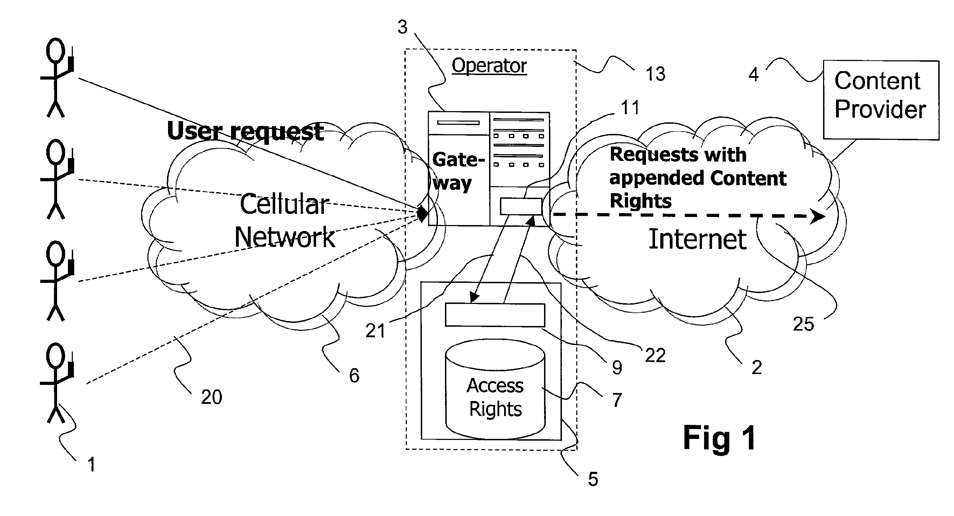

Fig 1 shows schematically a system in which the invention is implemented. A number of users 1 are connected to a Wide Area Network, in this case the Internet 2, via a gateway 3. The gateway can be a WAP (Wireless Application Protocol) gateway, providing the users with WAP access to the internet. In this case, the users are connected to the gateway through a wireless network, such as a cellular network 6 (e.g. GSM). The gateway may likewise be a proxy server, providing the users with fixed Internet access. The gateway is arranged to forward requests (e.g. HTTP standard requests) from the users to the network 2, while keeping track of the identity of the originating user 1, in order to be able to direct the response from the network to the correct user.

In such a system, all users are represented by only one IP (Internet Protocol) address, i.e. the IP address of the gateway 3. In other words, it is only the gateway 3 that can distinguish from which user a specific request originates, and, conversely, to which user direct the result of such a request. To a server connected to the network 2, such as a content provider server 4 on the Internet 2, all requests from the users 1 will be interpreted as originating from the same source, i.e. the gateway 3.

Fig 1 also shows a gateway control unit 5, arranged to perform the method according to the invention. For this purpose, the control unit 5 comprises a database 7, adapted to store content access rights for the users 1, and software 9 for handling the database 7 and communicating with the gateway 3. The gateway is provided with corresponding software 11, arranged to communicate with the software 9 and to interact with the data traffic in the gateway 3. The control unit 5 can be installed on the same hardware unit as the gateway software itself, or can be installed on a separate unit, available to the gateway software 11 through a suitable interface.

The gateway 3 can be operated by an operator, referred to as a Network Service Provider (NSP) 13, handling the end user relations, e.g. billing and customer relations. In a traditional case, the users are billed regularly based on the time they are connected, or on the amount of data they transmit/receive.

According to the described embodiment of the present invention, the NSP offers the users to access contents supplied by the content providers 4, that is restricted to public access. A user 1 who is interested in accessing such content will be charged for this service by the operator, in a suitable way. When a user 1 has agreed to pay for a specified access, the content access rights of this user will be updated in the database 7.

It is not necessary that all users be included in the database. Only users that have agreed to participate, i.e. are interested in accessing some of the restricted contents from the content providers 4, need to be listed in the database. However, it might be preferred to include all users, and indicate a "zero" level of access rights to those not participating.

The information in the database 7 can be of any suitable format, as long as it is capable of indicating the access rights of the user 1. As a simple example, the database can store, for each user, a reference to one or more predefined "content packages", where each package includes access to a specified number of content providers 4.

In the described system, a plurality of operators can exist. However, it is possible that different operators cooperate with different content providers, and thus offer slightly different contents through their gateways.

The participating users, content providers and operators together form a community for controlled content access over the network.

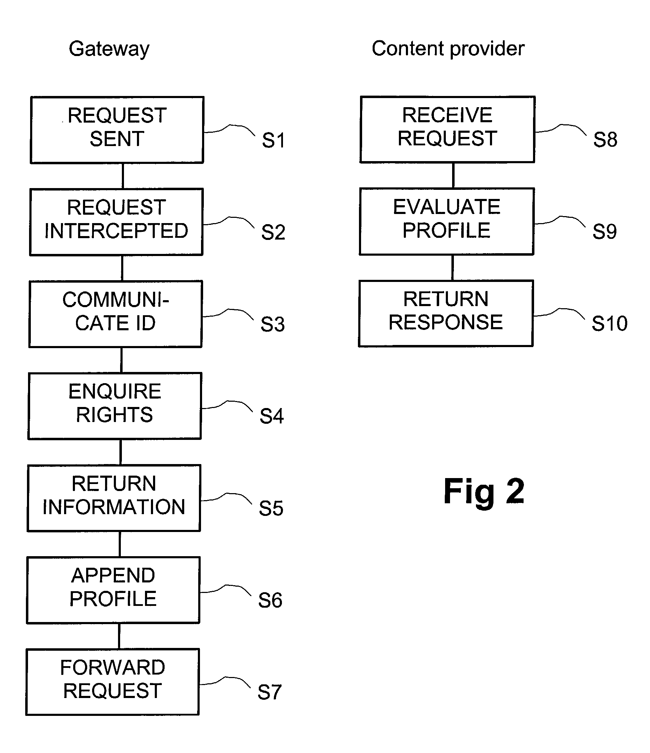

With reference to fig 2, the function of the system in fig 1 will be described.

First, in step S1, a request, indicated by 20 in fig 1, is sent from a user 1, designated to one of the content providers in the network 2. The request 20 is intercepted by the gateway 3 (S2). Instead of forwarding the request directly to the network 2, as in a conventional system, the gateway software 11 communicates (S3) the identity of the user to the software 9 in the control unit 5. The user identity can be determined in the same way as during any other conventional communication, and be sent to the control unit 5 as e.g. a numeral identifier. In response to the ID, the software 9 inquires (S4) in the database 7 the access rights of this particular user 1, and returns (S5) this information to the gateway software 11. The steps S3-S5 are indicated by arrows 21 and 22 in fig 1.

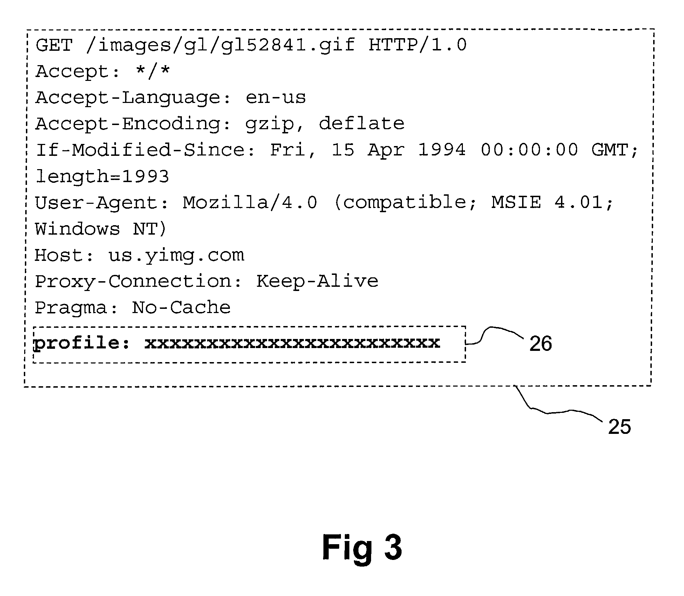

The gateway software 11 now appends (S6) the received information to the request 20, in a format suitable for the employed communication protocol. If the protocol is HTTP, a character string has been found advantageous, but other formats can be used, as would be known to one of ordinary skill in the art. Next, the gateway software 11 forwards (S7) the request, indicated by 25 in fig 1, to its intended destination. An example of such a request 25 is illustrated in fig 3, with the profile referred to as 26. In this case, the profile is a binary string, consisting of a combination of ones and zeros. This should be regarded strictly as an example, and not as any limitation of the described embodiment.

The destination content provider thus receives (S8) a request 25 provided with an access profile 26 belonging to the originating user 1. The profile 26 enables the content provider to determine whether or not the user 1 is entitled to the requested contents. In step S9, the content provider extracts the access rights profile and evaluates it. Then, in step S10, a response to the request is returned to the user. The response will depend on the access rights of the user, ranging from full delivery of the requested contents, to a full rejection.

In the case of a content provider not participating in the system, e.g. a content provider who's contents are freely available to any network user, the appended profile will be disregarded. This feature is supported by e.g. the HTTP request format. Alternatively, the profile is only appended to requests designated for content providers participating in the community.

In an alternative embodiment, the access rights profile is only appended to requests originating from users participating in the community.

It should be noted that many of the details described above can be modified by the skilled man without departing from the claimed invention. For example, the details in the process of determining the access rights of a particular user, and appending a representation of these rights to the request, can be performed differently.

## Claims

1. Method for providing a user (1), connected to a Wide Area Network (2) via a network gateway (3), with access to services provided by content providers (4) on said Wide Area Network, comprising:
providing a database (7) for storing content access rights for said user (1),
receiving (S2), from said user, a request (20) to contents from one of said content providers (4),
accessing (S3) said database (7), to determine the content access rights for said user,
appending (S6) a representation (26) of said content access rights to said request, and
forwarding (S7) said request to the intended content provider.

2. Method according to claim 1, wherein said database (7) is updated in response to changing user privileges.

3. Method according to claim 1, wherein said representation (26) is a character string.

4. Method according to any one of the preceding claims, wherein a connection between the user (1) and the gateway (3) is wireless.

5. Method according to any one of the preceding claims, wherein said gateway (3) is a WAP gateway.

6. Method according to any one of the preceding claims, wherein said gateway (3) is a proxy server.

7. Method according to any one of the preceding claims, wherein said gateway (3) is operated by an operator (13) charging said user for network access.

8. Method according to claim 7, wherein said operator (13) charges the user (1) in relation to the content access rights of the user.
